# EUROPEAN PATENT SPECIFICATION

(11) **EP 2 817 676 B1**
(45) Date of publication and mention of the grant of the patent: **06.05.2020**
(21) Application number: 13713541.4
(22) Date of filing: 21.02.2013
(51) Int. Cl.: G03B 15/06, G03B 15/00, G03B 15/05

(54) **PHOTO STUDIO FOR USE IN A KITCHEN**
FOTOSTUDIO ZUR VERWENDUNG IN EINER KÜCHE
STUDIO PHOTO DESTINÉ À ÊTRE UTILISÉ DANS UNE CUISINE

(30) Priority: 21.02.2012 BE 201200103
(43) Date of publication of application: 31.12.2014
(73) Proprietor: Apicbase NV, 2060 Antwerpen (BE)
(72) Inventor: ROTHUYS, Kim, 2600 Berchem (BE); BURLAT, Julien, 2018 Antwerpen (BE); JACOBS, Carl, 2900 Schoten (BE)
(74) Representative: Brantsandpatents bvba
(86) International application number: PCT/IB2013/051426
(87) International publication number: WO 2013/124813

(56) References cited:
- EP-A1- 2 418 539
- CN-U- 201 464 772
- JP-A- 10 020 368
- JP-A- 2008 193 570
- JP-A- 2010 085 151
- US-A- 4 519 684
- US-A1- 2003 194 229
- US-A1- 2004 042 231
- US-A1- 2006 136 559

## Description

### Introduction

The invention relates to a photographical apparatus used in a kitchen, for instance in a home or professional kitchen, in order to quickly take digital and reproducible pictures of dishes in a standardised way, as well as to a process of the digital photography of food dishes with the device according to the invention.

### Background of the invention

Professional pictures of dishes presented in an attractive way, are well known in the state of the art and can be found in abundance in cooking books as illustrations. These photographs have often been digitally enhanced or the dishes have been treated before taking the picture in order to make them look more attractive. Not as well known are the pictures of dishes taken to document their composition and presentation and less for their attractiveness or usability as illustrations. Those are the pictures that belong to the personal archive of a cook, a restaurant, a school, training... Those pictures furthermore document the skill and art of a chef cook and are the only means of preserving the preparation of unique creations which will be eaten afterwards.

Taking pictures of dishes, especially those on a recipient such as a platter, a plate, plank, roster, coupe, etc. is usually done with a hand camera, optionally with a tripod, with or without the help of extra lighting such as a flashbulb or permanent lighting. Such a way to take pictures of dishes has several drawbacks. It is always necessary to re-adjust lighting, focal length and the like, to get a good picture that is not over- or underexposed, and has a sharp and complete image of the subject. Furthermore, a dish can be photographed from different angles, because of which pictures taken from the same dish, but on a different time or place, or by a different person, can hardly be compared to each other. It also takes some time to make a good picture and a certain amount of skill that isn't always present in cooks or their personnel. Such a picture usually does not get taken in the kitchen proper where it was made, because of too many disturbances in the background, which means that the dish usually is being brought to another room to be photographed. All this requires time and prohibited until now a standardised and routinely way of taking pictures of food. The inventors have now designed a photographical device that overcomes the aforementioned disadvantages. The inventions solves the problem of how dishes, during preparation and when finished, can be photographed in a fast and easy way, that is representative of the dish, to create unambiguous and comparable digital pictures of dishes presented on a recipient.

### State of the art

JP 10/20368 (Sekido, 1998) describes a photographic apparatus comprising of a square, foldable box open on one end, with a light source placed above the dish and a non-integrated digital camera which can be placed in an opening in the back of the box whereby the recording direction makes a corner with respect to the direction of the lighting. The photographic apparatus can be used to make professionally looking pictures with a simple apparatus.

JP 2008/193570 refers to a apparatus for photographing food and drinks put on a table, in order to preserve information about the photographed food for medical purposes.

CN201464772U describes a portable collecting device for rib-eye images of beef carcasses.

US4519684 describes an improved photo flash lamp suited for medical photography.

EP2418539 describes a device for taking photographs.

JP2010085151 describes a light source device for use in a camera, said device has a reflecting plate.

US2003/194229 describes an omni-positional camera mount for the photographing of small objects.

US2004/042231 describes a structure of light box assembly, including diffuser plates.

### Summary

The present invention relates to a photographic apparatus for the photography of food dishes. The apparatus relates in particular to an apparatus as proposed according to claim 1.

In a second aspect the present apparatus also relates to a method for photographing a food dish on a recipient, as can be found in claim 9 .

### Description of the invention

The inventors have developed a photographical apparatus (hereafter called photo studio) that overcomes the disadvantages present in the state of the art. The photographical apparatus according to the invention includes a platform on which the food dishes can be placed, a light source and a digital photo device comprising at least of a photographic objective and a light sensitive sensor characterised in that said objective of said photo device is coaxially mounted with and in the middle of said light source almost central above said platform. This photographical apparatus has several advantages.

By putting the camera above the platform with the objective pointing down toward the platform and the dish placed on top of it and taking a picture in this fashion, one gets a picture that is independent of the position and way in which a dish is put on the platform. One can always digitally turn the picture to correct a different position of the dish on the platform if one wants to compare pictures of the same dish.

This kind of recording technique is unusual in the field of photography and is not often applied, because it is not considered very aesthetic. Besides, this technique is difficult to use in or near a kitchen with a common handheld camera, because the photographer needs to hold the camera over the food dish and has to look through the objective in order to control the focus and whether the whole of the subject is being photographed. A tool to obtain the latter has been described in JP 07/234439.

The photographic apparatus comprises at least a photographic objective and a light sensitive sensor, the latter taking care of the imaging. In an embodiment the photographic apparatus is a commercially available digital camera. In another version the photographic apparatus comprises of a photographic objective, a light sensitive sensor, a diaphragm and a shutter, mounted in a casing and adapted to the photographic apparatus according to the invention. Other components can be present, such as a power source, memory and a CPU. A preferred embodiment of the apparatus comprises of a way to connect the apparatus with a computer, preferably through a wireless connection with a PC, or connect to a network, preferably a wireless network, for example through a WiFi protocol. The photographical apparatus supports a WiFi unit for this purpose. This has the advantage that the apparatus according to the invention can immediately send a recorded picture to a storage medium outside of the machine, such as a cloud network or a website, for example any social website like Facebook, Pinterest, Twitter, Instagram, Google, Hyves... or to a specialised website, for instance a website for cooks. In an embodiment of said invention the picture can also be sent to the mailbox or social network of the consumer or client who ordered the dish. The consumer can sign in to this service after supplying some personal data like an e-mail address, social network account etcetera. As an option, extra information can be linked to the picture, such as time of the recording, location of the recording, name of the dish, name of the chef, ingredients used, the recipe for the dish. In an embodiment the picture will be given a label, for instance a watermark, which immediately refers to the author of the dish (for instance the name of the chef, name of the restaurant, logo, etc.) to, for instance, claim the copyrights of the author.

According to one preferred embodiment, the objective is placed in such a way that a substantially fixed distance will be kept between the objective and the platform, in order to be able to always take a sharp picture of the dish without having to adjust the settings (shutter speed, diaphragm). This has the advantage that a picture can be made very quickly because there is no need to refocus. In its simplest form the objective is a single lens. A structure of different lenses will mostly be used.

Preferably, for a certain objective with a certain focal length a diaphragm will be chosen that will give a large depth. The smaller the diaphragm (meaning the larger the aperture number or F-number) the larger the depth created. Furthermore, a digital camera has the advantage that it usually has a sensor that is much smaller that the format of for instance mm film (36mm x 24 mm). A compact camera for instance has a sensor surface of (6mm x 4 mm). This means that depth significantly increases. A camera with a sensor that is six times smaller, will deliver the same depth as if the aperture number is six times as large. This way pictures are created in which everything is in focus over a depth from a couple of centimetres to some ten centimetres. This is enough for a food dish.

The objective is placed coaxially with and in the middle of the light source, meaning that the axis through the middle of the objective and the axis through the middle of the light source essentially coincide. The benefit is that an even lighting is obtained. The even lighting is further improved by choosing a reflecting or light colour for the reflecting surfaces, for instance a white inside of the casing. The structure of objective and light source is in an almost central position above the platform with the dish that will be photographed. The benefit is that an even lighting of the dish is obtained.

According to an embodiment the light source will be a LED unit, preferably with a diffuse light image and high light quality. The LED lights can emit light directly downwards in the direction of the platform with the dish that needs to be photographed, or in another direction, for instance sideways, giving an indirect lighting. According to another version the light source will be a TL lamp or a fluorescent lamp. According to yet another version the light source consists of several light bulbs, CFLs, halogen lamps etc. that have been put around the objective, for instance in a casing provided with a breathable cap or cover, which produce a diffuse and even light. The light source provides light from all around the lens/objective providing a uniform lighting. In an embodiment the light source can consist of two, three four or more ring segments interrupted by zones that do not emit light. In an embodiment the light source can be circular.

Preferably the light source will be activated before the food dish is put on the platform in the photo studio. With even more preference the light source can be activated independently from taking a picture. An embodiment of the apparatus features a platform of the photo studio constantly lit by the light source, meaning that the light source is constantly active. The advantage is that the platform of the photo studio, meaning the position where the dish needs to be put, is clearly visible in order for a dish to be put quickly and accurately in the right position and after taking the picture can be taken out of the apparatus again. Preferably the light source is switched on (meaning that the light starts to burn continuously) when the photo studio is switched on. The advantage is that it is clear that the photo studio is in its working (activated) condition. Furthermore, light sources that need to reach a certain temperature like energy saving lamps (CFL) can better maintain equilibrium and a constant light output ensures a constant light colour.

In an embodiment of the apparatus a second light source is provided, preferably a flash, that only illuminates at the moment of taking the picture. The position of such a second light source is to be chosen by the professional in regards to the design of the photo studio. The advantage of such a second light source is to provide fill exposure when the light of the light source is insufficient.

The photographic apparatus comprises of a platform on which a recipient with a dish can be placed. As a recipient any recipient can be chosen that is used in a kitchen, for instance a platter, a plate, a plank, a roster, a coupe etc.

This platform is positioned almost vertically under the objective. The platform is meant to receive a recipient with a dish. Preferably the platform is provided with positioning means, for instance a marker, as a help for placing, c.q. centralising the recipient on the platform, for instance a sign added as a level in the platform, or printed in a contrasting colour. Alternatively or additionally positioning means can be provided near the platform, for instance on the inner walls of the casing above the platform.

In an embodiment of the apparatus it is possible to change the height of the platform, for instance by means of a screw or lift system. This way the focal length can (slightly) be changed without the need to change the objective.

In a preferred embodiment of the apparatus the platform is open towards the surroundings, meaning that the platform is not closed off from its surroundings, for instance by a door. The advantage is that the vapour of hot dishes can dissipate to the surroundings and does not remain in the apparatus where it can contaminate the diffuser. Optionally even air extraction can be added to the apparatus to dissipate the vapours faster. A further advantage is that the dish can be put immediately on the platform. This is an advantage for dishes that have been prepared in a restaurant and quickly need to be served to a client, for instance because it needs to be eaten warm and where - before serving - a quick picture can be taken of the dish, which is often a unique creation by the chef.

In a apparatus a diffuser is provided in the form of a translucent plate from glass or plastic, fitted between the light source and the platform. The advantage is an even light and an extra advantage is the physical buffer between the space for the dishes and the location of the apparatus, more specific a kitchen and sensitive electronics and optics (the objective). Because of this, the objective is protected from greasy and hot vapours that can emanate from a dish when it is put in the photo studio. This way, it suffices to clean the diffuser, for instance with a cloth, to get a clear image.

In an embodiment of the apparatus the photographical apparatus is provided with a casing that integrates and protects the parts of the apparatus, in particular the platform, the light source and the digital photo device, and gives the apparatus an ergonomic and aesthetic form and design. The material of the casing can be chosen freely, but since the apparatus will most likely be put in or near a kitchen, the casing can be manufactured from a material that is usually used for kitchen apparatus, such as plastic, glass and metal, in particular stainless steel and aluminium, or combinations of those.

The apparatus also comprises all the necessary operating means to switch on the apparatus, take pictures etc. Such operating means are preferably placed on the outside of the casing, specifically at the front or on top op the casing. Examples of such operating means may be a switch, a knob, a touch screen, a keyboard etc. A touch screen in particular takes preference, because this can be implemented in order for the digital picture to immediately be presented on the touch screen as a means to control the correct functioning of the photographic apparatus.

In an embodiment the apparatus is provided with a temperature controlling system. Such a system can be used to keep cold or warm dishes. With it the desired temperature for the casing can be set dynamically. Both cooling as well as heating elements can be provided to dynamically regulate temperature. In particular a humidity control can be added. All these measures make sure that the food dishes do not lose any quality while the picture is being taken. In a further version the apparatus consists of a timer indicating how long the dish has been sitting in the apparatus. This timer can be provided with an alarm that can go of to indicate if a dish has been in the apparatus for too long. In particular the user of the apparatus can dynamically set the timer.

In a second aspect the invention discloses a method for photographing a dish on a recipient with a digital photographical apparatus according to the invention, comprising the following steps:
- placing a dish on a recipient on the platform;
- operating one operating means.

Said method is extremely simple and only requires very few actions, given the fact that a apparatus according to the invention is available and activated, meaning it was switched on: putting the dish on a recipient on a platform, where the positioning means can help to put the recipient on its destined spot, for instance centrally on the platform; using a single controlling means , for instance a button or touch screen to make the digital picture. These two actions can be performed in mere seconds. In fact, the photographical apparatus functions in this case as a commercial copier that takes a digital copy of the original.

Said method can also include further steps, for instance:
- saving the digital picture in a memory, for instance onboard memory integrated in the photographical apparatus;
- sending the digital picture to a network, a website like a social network site or a specialised site, a mailbox and or a PC, either real-time or delayed.
- adding data to the digital picture, for instance a description, date, place...
- modifying the digital picture, for instance with Photoshop, in order to, for instance improve the colour saturation, change file size, change the type of the digital picture or convert it, for instance into a JPEG, bitmap or other format.

In a last aspect said invention discloses a collection of pictures made with the help of the apparatus and the method according to the invention. This collection of pictures can be consulted by both the professional user as the more recreational user, potentially after making a contribution such as a registration fee or a subscription. Preferably the collection of pictures will be stored in the cloud. These pictures can be shared with other networks, for instance social network sites like Pinterest, Twitter, Instagram, Facebook, etc. or through a website.

The pictures will preferably be stored on secured servers in high resolution and in RAW format. They can then be offered to a website or network in a smaller format. Users can sign up to the website or the network in order to either upload pictures themselves, to store and offer to third parties, share or look at pictures of others. In this respect the invention relates to a web application that can be used to send, upload, download and share pictures available from a database. The user can indicate, preferably through presets, whether or not specific information may be made available to the general public or whether it needs to be kept private.

In an embodiment of the apparatus the images can contain 3D data that can contain information necessary for a 3D printer, for instance a food 3D printer. This way, the unique dish can be reproduced from the collected 3D data together with any other data linked to the images.

The photographical apparatus according to invention will now be further explained by way of example and with references towards certain figures without being limited to them. The same reference numbers in the added figures refer to the same parts.

### Description of the figures

Figure 1 shows a cross section of a first embodiment of a photographical apparatus according to the invention.
Figures 2a and 2b show two alternative frontal views of a first embodiment of the photographical apparatus according to the invention.
Figure 3 shows a side of a second embodiment of the photographical apparatus according to the invention.
Figure 4 shows a logical diagram for the control of the different functions of the apparatus.

The following reference numbers are being used in the text and figures.
- 1: Photographical apparatus
- 2: Platform
- 3: Positioning means
- 4: Light source 1
- 5: Light source 2 (flash)
- 6: objective, diaphragm and shutter
- 7: Light sensitive sensor
- 8: CPU
- 9: Touch screen
- 10: Casing
- 11: Diffuser (plate)
- 12: WIFI - unit
- 13: Memory
- 14: Power source
- 15: Power supply

### Detailed description of the invention

In the following description and the claims, left and right hand references are determined by standing in front of the façade of the photographical apparatus and by looking in the direction of the back of the photographical apparatus, meaning looking at the front end. Also in the following description and claimmust be understood that terms like "front", "back", "underside", "upside", "inside", "outside", "left", "right", "top", "bottom", "inside", "outside" etc. as used throughout this description, will be determined with reference to the normal operating mode of the photographical apparatus and in its normal orientation, unless otherwise specified. Terms used in this way should not be understood as limiting terms.

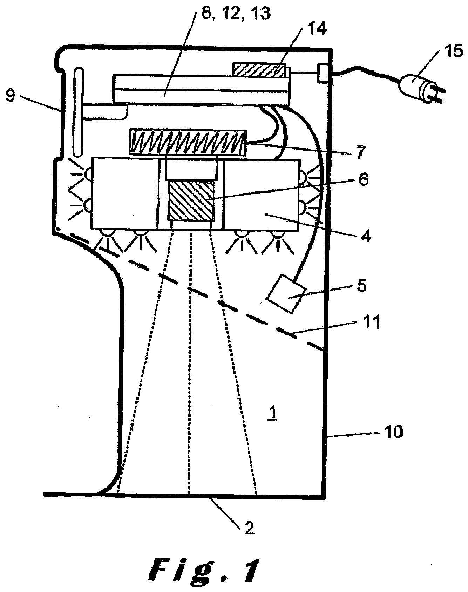

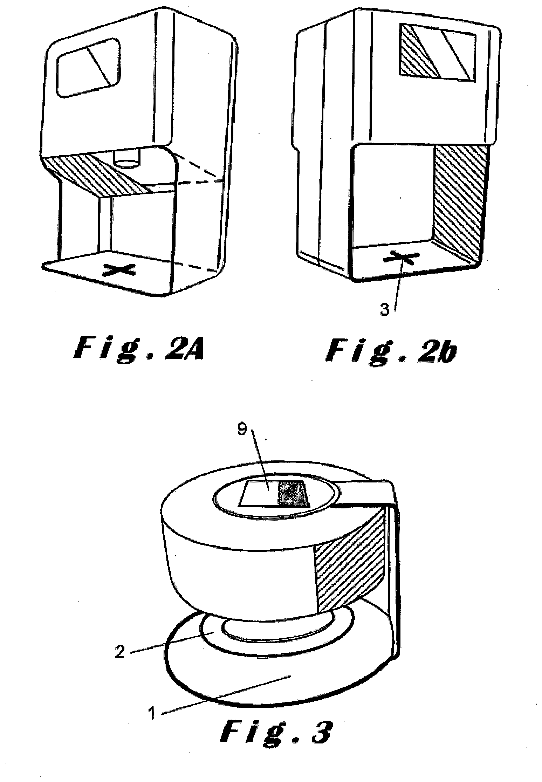

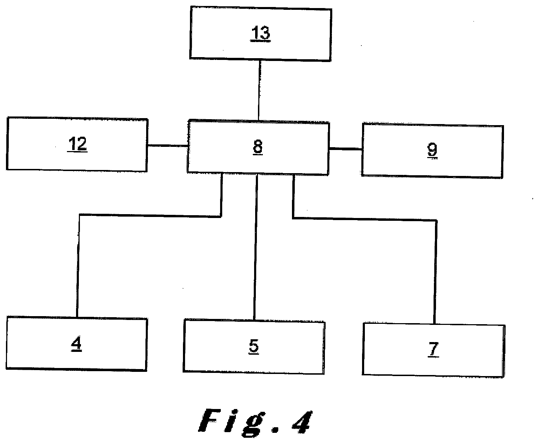

Figures 1 and 2 show a first photographical apparatus **1** according to the present invention. Photographical apparatus **1** consists of a platform **2**, on which the recipient will be placed that holds the dish that will be photographed. This platform is open towards the front. On the platform a sign **3** is applied to make positioning the recipient easier. Centrally above the platform a light source **4** is situated which takes care of direct and indirect lighting. In the middle of the light source can be found a structure made up of objective, diaphragm, shutter **6** and a light sensitive sensor **7** on which the digital image will be formed. This structure can also be a commercial camera. A second light source **5**, for instance a flash, is situated under the light source and takes care of fill exposure if so desired. The light sensitive sensor **7** is connected with a CPU **8** that, amongst others, takes care of controlling the light sources **4** and **5**, optionally saving the picture in a memory **13**, or sending it through a wireless WiFi unit **12**, as schematically displayed in figure 4. The CPU can receive commandos through a touch screen **9** on the front of the apparatus, on which the picture itself can also be shown as a means of control after it's been taken. The touch screen can be used to input certain data and parameters for a correct and desirable operation of the photographical apparatus. The light source **4** is a LED unit that shines light both downward and sideways. The light is diffused through a diffuser plate **11** between the objective and the platform, creating an even lighting. In the example apparatus the diffuser is not placed right-angled on the axis through the objective, but does form an angle. However, the plate can be placed right-angled on the axis through the objective, as indicated in figure 2b. The photographical apparatus also consists of a power source **14** for instance a 12 V DC for the CPU, the touch screen and the light sources. A Current can be obtained from classic 220 V power. A possible use of the photographical apparatus can be the following: when the first photographical apparatus is switched on, the light of the light source is on and the touch screen is configured as shutter. A dish is being put on the platform and by a push on the touch screen a picture is taken and sent to a server that is connected wire-lessly to the photographical apparatus. The objective has a focal length of 18mm, the aperture number is f/16 and the distance to the ceiling is 30 cm. Hereby a depth is reached in a plane from 23.7 cm to the top of the platform, meaning that the dish will be in focus over a depth of 6.3 cm. This is usually enough for a food dish. However, by reducing the aperture number, for instance to f/32, a depth can be reached from 19.6 cm to the top of the platform, meaning that the dish will be sharp over a depth of 10.4 cm.

Figure 3 shows a side of the second version of a photographical apparatus according to the invention. Hereby the platform is on all sides almost completely open to its surroundings. The touch screen **9** can be found on the top of the photographical apparatus. This second version is extremely well suited for round recipients.

## Claims

1. A photographical apparatus (1) to take pictures of food dishes, comprising
a platform (2) on which to put a dish,
a light source (4) formed by a plurality of light emitting elements and situated centrally above said platform (2),
a digital photo device (7) comprising of at least an objective and a light sensitive sensor (7),
a translucent plate (11), fitted between said light source (4) and said platform (2),
a casing (10),
a CPU (8) controlling at least the light sources,
whereby said objective of said photo device is placed in the middle of the light source so that its optical axis is coaxial with the axis of the light emitted by the light emitting elements **characterized in that**
said casing (10) encloses the light source and the digital photo device and integrates the platform, wherein the casing (10) is permanently open at least on part of a front side of the apparatus (1) so that the integrated platform (2) is physically in contact with the exterior, and
the casing (10) further includes a touch screen (9) adapted to receive commands, to send commands to the CPU (8) and to show images acquired by the digital photo device.

2. Photographical apparatus according to claim 1, **characterized in that** said objective is pointing downward towards the platform (2).

3. Photographical apparatus according to anyone of the previous claims, further comprising means for connecting the setup with a computer and/or a network.

4. Photographical apparatus according to anyone of the previous claims, in which the objective and the platform (2) are set in an almost fixed distance from each other.

5. Photographical apparatus according to anyone of the previous claims, in which the light source (4) is a LED unit.

6. Photographical apparatus according to anyone of the previous claims, in which the platform (2) is constantly lit by the light source (4).

7. Photographical apparatus according to anyone of the previous claims, in which a second light source (5) is added that only illuminates at the exact moment when a picture is taken.

8. Photographical apparatus according to anyone of the previous claims, in which the platform (2) is marked with positioning means (3) for helping to place the recipient on the platform.

9. Method for photographing a dish on a recipient, comprising the steps of:
- Providing a photographical apparatus (1) according to any of the previous claims,
- Providing a dish on said platform of said photographical apparatus;
- operating one operating means for photographing said dish.

10. Method according to claim 9, further comprising one or more of the following steps:
- saving the digital picture on a memory;
- sending the digital picture to a network, a website and/or a PC;
- adding data to the digital picture;
- modifying the digital picture; and optionally
- storing the digital picture in the cloud.

11. Method according to one of both claims 9 or 10, **with the characteristic that** the digital picture will be sent to a network, a website or the consumer of the dish.

12. Method according to one of the claims 9 to 11, **with the characteristic that** the picture is provided of a label.

## Patentansprüche

1. Fotografische Vorrichtung (1) zum Aufnehmen von Bildern von Speisegerichten, Folgendes umfassend:
eine Plattform (2), auf die das Gericht gestellt wird,
eine Lichtquelle (4), die von mehreren lichtemittierenden Elementen gebildet wird und die sich mittig über der Plattform (2) befindet,
ein digitales Fotogerät (7), das mindestens ein Objektiv und einen lichtempfindlichen Sensor (7) umfasst,
eine durchscheinende Platte (11), die zwischen der Lichtquelle (4) und der Plattform (2) eingepasst ist,
ein Gehäuse (10),
eine CPU (8), welche zumindest die Lichtquellen steuert,
wobei das Objektiv des Fotogeräts derart in der Mitte der Lichtquelle platziert ist, dass dessen optische Achse koaxial mit der Achse des Lichts liegt, die von den lichtemittierenden Elementen emittiert wird, **dadurch gekennzeichnet, dass**:
das Gehäuse (10) die Lichtquelle und das digitale Fotogerät umschließt und die Plattform integriert, wobei das Gehäuse (10) zumindest an einem Teil einer Vorderseite der Vorrichtung (1) dauerhaft offen ist, so dass die integrierte Plattform (2) in physischem Kontakt mit dem Außenraum steht, und
das Gehäuse (10) ferner einen Touchscreen (9) beinhaltet, der dafür eingerichtet ist, Befehle zu empfangen, Befehle an die CPU (8) zu senden und Bilder zu zeigen, die durch das digitale Fotogerät erfasst wurden.

2. Fotografische Vorrichtung nach Anspruch 1, **dadurch gekennzeichnet, dass** das Objektiv nach unten, hin zur Plattform (2) weist.

3. Fotografische Vorrichtung nach einem der vorhergehenden Ansprüche, ferner Mittel zum Verbinden der Einrichtung mit einem Computer und/oder einem Netzwerk umfassend.

4. Fotografische Vorrichtung nach einem der vorhergehenden Ansprüche, wobei das Objektiv und die Plattform (2) in einen beinahe festen Abstand zueinander gesetzt sind.

5. Fotografische Vorrichtung nach einem der vorhergehenden Ansprüche, wobei die Lichtquelle (4) eine LED-Einheit ist.

6. Fotografische Vorrichtung nach einem der vorhergehenden Ansprüche, wobei die Plattform (2) konstant von der Lichtquelle (4) beleuchtet wird.

7. Fotografische Vorrichtung nach einem der vorhergehenden Ansprüche, wobei eine zweite Lichtquelle (5) hinzugefügt ist, die nur genau in dem Moment aufleuchtet, wenn ein Bild aufgenommen wird.

8. Fotografische Vorrichtung nach einem der vorhergehenden Ansprüche, wobei die Plattform (2) mit Positionierungsmitteln (3) markiert ist, die das Platzieren des Behälters auf der Plattform unterstützt.

9. Verfahren zum Fotografieren einer Speise in einem Behälter, folgende Schritte umfassend:
- Bereitstellen einer fotografischen Vorrichtung (1) nach einem der vorhergehenden Ansprüche,
- Bereitstellen einer Speise auf der Plattform der fotografischen Vorrichtung,
- Bedienen eines Bedienungsmittels zum Fotografieren der Speise.

10. Verfahren nach Anspruch 9, ferner einen oder mehrere der folgenden Schritte umfassend:
- Speichern des digitalen Bildes in einem Speicher,
- Senden des digitalen Bildes an ein Netzwerk, eine Webseite und/oder einen PC,
- Hinzufügen von Daten zum digitalen Bild,
- Modifizieren des digitalen Bildes und optional
- Speichern des digitalen Bildes in der Cloud.

11. Verfahren nach einem der beiden Ansprüche 9 und 10 mit der Kennzeichnung, dass das digitale Bild an ein Netzwerk, eine Website oder den Verbraucher der Speise gesendet wird.

12. Verfahren nach einem der Ansprüche 9 bis 11 mit der Kennzeichnung, dass das Bild eines Etiketts bereitgestellt wird.

## Revendications

1. Appareil photographique (1) pour prendre des photos de plats de nourriture, comprenant
une plate-forme (2) sur laquelle on place un plat,
une source de lumière (4) formée par une pluralité d'éléments d'émission de lumière et située centralement au-dessus de ladite plate-forme (2),
un dispositif de photo numérique (7) comprenant au moins un objectif et un capteur sensible à la lumière (7),
une plaque translucide (11), montée entre ladite source de lumière (4) et ladite plate-forme (2),
un boîtier (10),
une unité centrale de traitement (8) commandant au moins les sources de lumière,
dans lequel ledit objectif dudit dispositif de photo est placé au milieu de la source de lumière de telle sorte que son axe optique est coaxial à l'axe de la lumière émise par les éléments d'émission de lumière, **caractérisé en ce que** ledit boîtier (10) entoure la source de lumière et le dispositif de photo numérique et intègre la plate-forme, dans lequel le boîtier (10) est ouvert de façon permanente, au moins sur une partie d'un côté avant de l'appareil (1) de sorte que la plate-forme intégrée (2) est physiquement en contact avec l'extérieur, et
le boîtier (10) comprend en outre un écran tactile (9) conçu pour recevoir des commandes, pour envoyer des commandes à l'unité centrale de traitement (8) et pour afficher des images acquises par le dispositif de photo numérique.

2. Appareil photographique selon la revendication 1, **caractérisé en ce que** ledit objectif est orienté vers le bas vers la plate-forme (2).

3. Appareil photographique selon l'une quelconque des revendications précédentes, comprenant en outre des moyens pour relier l'installation à un ordinateur et/ou un réseau.

4. Appareil photographique selon l'une quelconque des revendications précédentes, dans lequel l'objectif et la plate-forme (2) sont situés à une distance presque fixe l'un par rapport à l'autre.

5. Appareil photographique selon l'une quelconque des revendications précédentes, dans lequel la source de lumière (4) est une unité à LED.

6. Appareil photographique selon l'une quelconque des revendications précédentes, dans lequel la plate-forme (2) est éclairée en permanence par la source de lumière (4).

7. Appareil photographique selon l'une quelconque des revendications précédentes, dans lequel une seconde source de lumière (5) est ajoutée, laquelle seconde source de lumière s'allume uniquement au moment précis où une image est prise.

8. Appareil photographique selon l'une quelconque des revendications précédentes, dans lequel la plate-forme (2) est marquée avec des moyens de positionnement (3) pour aider à placer le récipient sur la plate-forme.

9. Procédé pour photographier un plat sur un récipient, comprenant les étapes consistant à :
- fournir un appareil photographique (1) selon l'une quelconque des revendications précédentes,
- fournir un plat sur ladite plate-forme dudit appareil photographique ;
- actionner un moyen d'actionnement pour photographier ledit plat.

10. Procédé selon la revendication 9, comprenant en outre une ou plusieurs des étapes suivantes :
- sauvegarder l'image numérique sur une mémoire ;
- envoyer l'image numérique à un réseau, un site Web et/ou un PC;
- ajouter des données à l'image numérique ;
- modifier l'image numérique ; et éventuellement
- stocker l'image numérique dans le nuage.

11. Procédé selon l'une quelconque des deux revendications 9 ou 10, **caractérisé par le fait que** l'image numérique est envoyée à un réseau, un site Web ou le consommateur du plat.

12. Procédé selon l'une quelconque des revendications 9 à 11, **caractérisée par le fait que** l'image est munie d'une étiquette.
